(19) Europäisches Patentamt
European Patent Office
Office européen des brevets

(11) EP 0 890 407 B1

(12) **EUROPEAN PATENT SPECIFICATION**

(45) Date of publication and mention of the grant of the patent:
**02.10.2002 Bulletin 2002/40**

(51) Int Cl.$^7$: **B23K 9/09**

(21) Application number: **98305404.0**

(22) Date of filing: **07.07.1998**

(54) **Method and apparatus for high frequency pulse ARC welding**

Verfahren und Vorrichtung zum Hochfrequenz-pulslichtbogenschweissen

Procédé et dispositif de soudage à l'arc par impulsions à haute fréquence

(84) Designated Contracting States:
**DE FR GB**
Designated Extension States:
**RO**

(30) Priority: **09.07.1997 JP 18348497**

(43) Date of publication of application:
**13.01.1999 Bulletin 1999/02**

(73) Proprietor: **Hitachi, Ltd.**
**Chiyoda-ku, Tokyo (JP)**

(72) Inventors:
- **Nihei, Masayasu**
  **Hitachi-shi, Ibaraki 319-1224 (JP)**
- **Onuki, Jin**
  **Hitachi-shi, Ibaraki 319-1222 (JP)**
- **Funamoto, Takao**
  **Hitachi-shi, Ibaraki 316-0036 (JP)**
- **Sakurai, Izumi**
  **Hitachi-shi, Ibaraki 317-0066 (JP)**
- **Onuma, Akira**
  **Hitachi-shi, Ibaraki 316-0034 (JP)**

(74) Representative: **Paget, Hugh Charles Edward et al**
**MEWBURN ELLIS**
**York House**
**23 Kingsway**
**London WC2B 6HP (GB)**

(56) References cited:
**DE-A- 4 233 818**
**GB-A- 1 181 717**
**US-A- 3 679 866**
**US-A- 4 861 965**

- **PATENT ABSTRACTS OF JAPAN vol. 008, no. 203 (M-326), 18 September 1984 & JP 59 092169 A (HITACHI SEISAKUSHO KK), 28 May 1984**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 890 407 B1

## Description

The present invention relates to a novel method for high frequency pulse arc welding, and an apparatus therefor and use thereof.

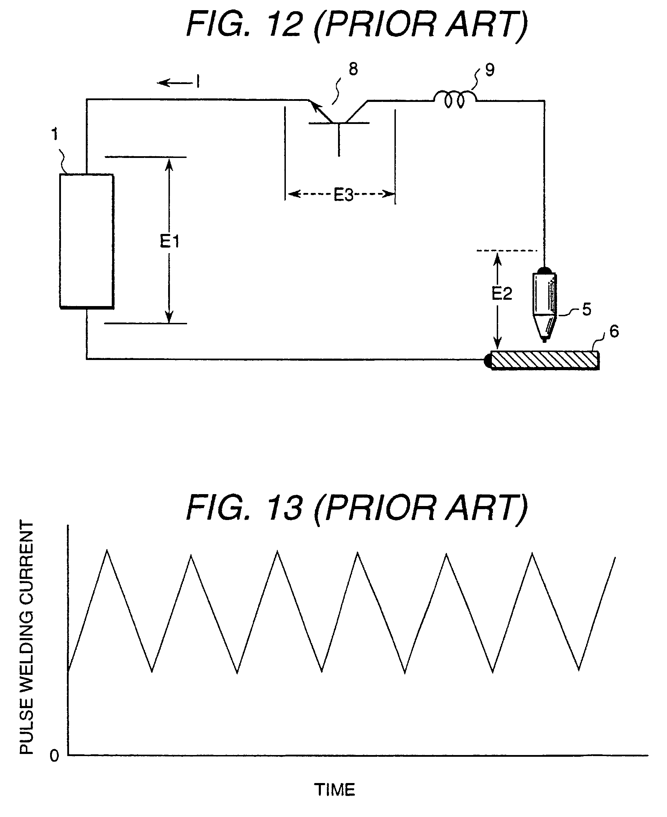

It is known that, in a conventional high frequency pulse arc welding method, as a peak value of high frequency pulse current is higher, a quenching force by an electromagnetic force becomes larger and consequently stiffness of an arc and pressure of the arc are increased largely. It is also said that vibration effect if the high frequency peak pulse current can decease grain size of a welding portion and reduce blowholes. However, the welding current in actual welding work is a ripple current due to inductance L of a welding cable as shown in FIG. 12, and accordingly there is a disadvantage in that the effect of high frequency pulse current cannot be obtained sufficiently. Further, in a conventional direct current TIG arc welding method, stiffness of the arc is obtained by a gas pinching force using a mixed gas of argon and hydrogen for the shielding gas as a means for giving the arc stiffness (directivity). This stiff arc is used for weld with a very narrow edge groove of austenitic stainless steels. However, this welding method cannot be used for welding of ferritic stainless steels or steels because of hydrogen embrittlement. Further, this welding method cannot be used for welding of aluminum or aluminum base alloys because hydrogen causes blowhole. On the other hand, the conventional pulse welding cannot apply to aluminum welding either because of lack of cleaning action.

Arc welding methods and apparatuses involved with high frequency pulse current are disclosed in Japanese Patent Application Laid-Open No. 53-119758, Japanese Patent Application Laid-Open No.54-131548 and Japanese Patent Application Laid-Open No.59-92169.

In the past, the pulse arc welding method has been small in arc stiffness, and consequently it has been difficult to perform welding with a narrow weld edge groove and welding of deep melting penetration.

US 4861965 and DE 4233818 both disclose methods of arc welding which apply a pulse having the opposite polarity to the main welding pulse after the main welding pulse to make the arc more directive.

The present invention seeks to provide a method for high frequency pulse welding and an apparatus for high frequency pulse welding in which the effect of inductance of the welding cable is eliminated, or at least reduced, and the high stiff arc and a cleaning action may be obtained.

Thus, according to a first aspect of the present invention there is provided a method for high frequency pulse arc welding which is performed by generating an arc between any one of an inconsumable electrode and a consumable electrode arranged near a portion of a base metal to be welded and the base metal with main pulse current, characterised in that said main pulse current has a current conducting time of 5-100 μsec per one pulse; and when said main pulse current is shifted from ON to OFF, a reverse pulse current having a polarity opposite to a polarity of said main pulse current is, immediately following the main pulse, supplied between the electrode and the base metal to make the rate of passage from the peak value of the main pulse current to the peak value of the reverse pulse current not smaller than 50A per 1 μsec.

According to a second aspect of the present invention, there is provided a method for high frequency pulse arc welding which is performed by generating an arc between an inconsumable electrode arranged near a portion of a base metal to be welded and the base metal with main pulse current while a filler wire is being supplied, characterised in that said main pulse current has a current conducting time of 5-100 μsec per one pulse and when said main pulse current is shifted from ON to OFF a reverse pulse current having a polarity opposite to a polarity of said main pulse is, immediately following the main pulse, supplied between the electrode and the base metal to make the rate of passage from the peak value of the main pulse current to the peak value of the reverse pulse current not smaller than 50A per 1 μsec.

According to a third aspect of the present invention there is provided an apparatus for high frequency pulse arc welding by which welding is performed by generating an arc between any one of an inconsumable electrode and a consumable electrode arranged near a portion of a base metal to be welded and the base metal with main pulse current, the apparatus comprising: a welding power source for supplying said main pulse current; a high frequency converter for converting a direct current to a high frequency pulse welding current having a polarity opposite to a polarity of the direct current; characterised in that said apparatus further comprises: a control unit for applying a reverse pulse current having a polarity opposite to a polarity of said main pulse current, immediately following the main pulse, between the electrode and the base metal to make the rate of passage from the peak value of the main pulse current to the peak value of the reverse pulse current not smaller than 50A per 1 μsec when said main pulse current is shifted from ON to OFF, said main pulse having a current conducting time of 5 -100 μsec per one pulse.

Preferably the converter is composed of semiconductors such as IGBT elements or the like. Preferably the welding power source and the converter are separated and connected using a welding cable or a coaxial cable between them.

It is thus possible for the present invention to provide a method for high frequency pulse welding and an apparatus for high frequency pulse welding which is excellent in stiffness (directivity) and stability of the arc, and particularly capable of preventing the arc from burning on side walls of very narrow weld edge groove having a gap smaller than 6 mm, and capable of performing deep melting penetration welding and high speed welding of aluminium or aluminium base alloys. In addition to this, an object of the present invention is to provide a butt welded structure and a rail-car body structure manufactured by the method and the apparatus.

The present invention may also provide a structure to be made of carbon steel or a low-alloy steel manufactured by butt welding with a narrow weld edge groove, and a nuclear power plant using the butt welded structures.

In the above aspects of the present invention, the rate of passage from the peak value of the main pulse current to the peak value of the reverse pulse current is not smaller than 50A per 1 μsec. Preferably this rate is not smaller than 100A per 1 μsec, and a rate of above 200A per 1 μsec is particularly preferable.

In order to do so, the welding load voltage is set to a voltage not lower than 60 V, and preferably to a voltage not lower than 80 V. The welding load voltage is preferably set to a voltage within a range of 60 to 200 V, and the welding load voltage within a range of 80 to 160 V is particularly preferable.

The present invention is characterized by that in a method for TIG high frequency pulse arc welding with a very narrow weld edge groove having a weld edge gap width below 6 mm, a directive arc is produced between an inconsumable electrode and a base metal by a main pulse current to prevent a side-wall arc and stably maintain the arc in the narrow weld edge groove.

A method for high frequency pulse arc welding of aluminum or an aluminum base alloy in accordance with the present invention is characterized by that a cleaning action and a directive arc are produced by properly selecting a current conducting time period ratio of the main pulse current to the reverse pulse current or a peak current ratio of the main pulse current to the reverse pulse current to make deep melting penetration welding and high speed welding possible.

It is preferable that a current stopping period is provided during a period between the reverse pulse current and the main pulse current after the reverse pulse current. It is also preferable that a base current smaller than the main pulse current is conducted during a period between the reverse pulse current and the main pulse current after said reverse pulse current.

It is preferable that either of peak values of the main pulse current and the base current the current conducting time periods of the main pulse current and the base current are periodically varied. It is preferable that the main pulse current is varied with a frequency in a range of several Hz to several tens Hz and the molten metal is stirred to prevent grain growth.

It is preferable that the reverse pulse current, the base current and the current conducting time period, the current stopping period can be independently varied.

In a method for high frequency pulse arc welding of aluminum or an aluminum base alloy in accordance with the present invention, it is preferable that a cleaning action and a directive arc are produced by varying a current conducting time period ratio of the main pulse current to the reverse pulse current or a peak current ratio of the main pulse current to the reverse pulse current to make deep melting penetration welding and high speed welding possible.

It is preferable that the rise time and the fall time of said main pulse current are not longer than 50 μ sec.

It is preferable that the welding power source and the high frequency converter are separated and connected using a welding cable or a coaxial cable.

The present invention is characterized by a butt welded structure made of aluminum and an aluminum base alloy, wherein structural parts composing the butt welded structure are joined by forming a weld metal of the aluminum or aluminum base alloy inside an I-shaped weld groove having a gap not larger than 6 mm.

The present invention is characterized by a rail-car body structure made of an aluminum alloy, wherein all of or part of structural parts composing the rail-car body structure are joined by welding with an I-shaped weld groove having a gap not larger than 6 mm.

The present invention is characterized by a butt welded structure made of a carbon steel or a low-alloy steel, wherein structural parts composing the butt welded structure are joined by forming a weld metal of the carbon steel or the low-alloy steel inside an I-shaped weld groove having a gap not larger than 6 mm; and stress relief annealing treatment after welding is omitted.

The present invention is characterized by a nuclear power plant comprising a nuclear reactor, a steam turbine, a condenser, a condensate demineralizer and pipes connecting between the components, the pipes being made of a carbon steel or a low-alloy steel, wherein the pipes have a butt weld structure, and are joined by forming a weld metal of the carbon steel and the low-alloy steel inside an I-shaped weld groove having a gap not larger than 6 mm; and stress relief annealing treatment after welding is omitted.

FIG. 12 is a schematic diagram showing a conventional pulse weld. The reference character 1 is a welding power source, the reference character 8 is a transistor for converting the welding power to a high frequency pulse current, and the reference character 9 is a floating inductance of a welding cable. Let a welding current flowing the circuit when the transistor 8 is turned ON be I, a power source voltage of the welder be E1, an arc voltage be E2, and an ON voltage of the transistor be E3. Here, assuming that the arc voltage is a constant value determined by a welding condition and not depending on the welding current, the following equation holds when the component of resistance is neglected.

$$E1 - E2 - E3 = L \cdot (dI/dt)$$

Therefore, the following equation holds.

$$I = [(E1 - E2 - E3)/L] \cdot t$$

It can be understood from the equation that the welding current does not increase steeply, but increases linearly at a constant speed. When the welding power source voltage, the welding load voltage and the transistor ON voltage are assumed to be invariable, increase of the current is in inverse proportion to the inductance L. When the transistor is turned OFF, the current decreases in nearly the same gradient as the gradient at rising. That is, in the first invention of the present application, a voltage supplied to the arc load is increased in order to make the rise of a pulse current steeper, as can be understood from the equation, and a voltage (current) is applied in the reverse direction (reversing the polarity) to forcefully interrupt the main direction current in order to make the fall of a pulse current steeper, as shown in FIG. 2. Further, in regard to the fall of the reverse direction current, as the reverse direction voltage is higher or the reverse direction time t2 is longer if the reverse direction voltage is constant, the effect becomes larger. As for the reversing of the polarity, the polarity is reversed by switching an applying direction of the voltage using four IGBT elements as shown in FIG. 1. In welding work for maintenance at a site such as welding of a cooling pipe in a nuclear plant, distance between the welder and the position of welding work sometimes becomes 50 to 100 m. In such a case, since the effect of the inductance of the cable is too large in a conventional high frequency pulse weld, the high frequency pulse current becomes a ripple current waveform, as shown in FIG. 13, and the effect of the high frequency pulse current is hardly obtained. In the present invention, the problem can be solved by increasing the load voltage and reversing the polarity. However, in the present invention, in addition to this, the effect of the inductance of the cable is reduced by separating the welding power source and the high frequency pulse converting portion, placing the converting portion near the welding work place and connecting the welding power source and the converting portion using a coaxial cable. When a base metal is in the negative polarity (during the reverse direction current), the base metal is cleaned because positive ions collide onto the base metal to remove the oxide film. However, since the depth of penetration becomes shallower during that period, the conducting time t2 of the reverse direction current (the base metal is in the negative polarity) is preferably set shorter except for welding of aluminum or an aluminum alloy. Therefore, it is necessary to set the conducting time t2 to a value within a range capable of obtaining an optimum waveform by observing consumption of the electrode or the like.

In a continuous pulse current of repeating main pulse current, reverse pulse current and main pulse current, reverse pulse current and so on, if the peak current is increased, the average current cannot be lowered because the average current is also increased corresponding to increase of the peak current and. Therefore, in the present invention, a current stopping period is provided between the reverse pulse current and the main pulse current after the reverse pulse current. The average current can be lowered by setting the time period long even if the peak current is increased. This method is effective in welding of a thin plate in which welding is performed with a small current and in stiffness of the arc and stability of the arc in weld with a very narrow edge groove.

In FIG. 2, when the main pulse current, the reverse current and the current conducting times are fixed constant and a small current (a base current) is conducted during t3 between the reverse direction current and the next main pulse, the average current is increased. That is, the average current can be varied by changing the base current. In general, a high average current is required in welding thick plates. However, if the high average current is obtained only by increasing the peak current, cost of the apparatus becomes expensive. Therefore, it is possible to weld thick plates by adding the base current in the period of t3 to increase the average current.

If the structure of a joined portion is grown to large grains, there are some cases where the boundary between the base metal and the joined portion cannot be clearly detected by ultrasonic wave inspection, which is a trouble of inspection. Therefore, in the present invention, by varying the main pulse current, the base current or any one of current conducting time of the main pulse current and the base current with a period in a range of several Hz to several tens Hz, an average arc pressure (average arc current) is varied to stir the molten metal to prevent grain growth. In arc weld with a very narrow edge groove having a gap smaller than 6 mm, weld can be performed with an amount of input heat approximately 1/2 as small as that in arc weld with a common narrow edge groove having a gap of 8 mm. However, it is necessary that the arc current of small input heat can be maintained in the very narrow weld edge groove. One method of weld with a very narrow edge groove is that an arc is stiffly concentrated by a pinch force of a mixed gas of argon and hydrogen to reduce side wall arc (in some cases, helium gas is mixed, but the effect is small because of a weak pinch force). However, the method cannot be used for steel or a ferritic alloy since hydrogen is used for the shield gas and causes hydrogen embrittlement. In the method of very narrow edge groove welding in accordance with the present invention, the average current can be lowered and the peak current can be increased by using a high frequency pulse arc welding current waveform even if inductance of the cable is large. Therefore, the arc is made stiff and the directive arc can be stably maintained even in weld with a very narrow edge groove and a small heat input (welding current). Further, the method in accordance with the present invention can be applied to welding of steel or a ferritic alloy because hydrogen embrittlement is not caused.

The conventional pulse weld cannot be used for welding of aluminum because of lack of cleaning action and blowhole caused by hydrogen. On the other hand, the pulse welding in accordance with the present invention can be used for welding of aluminum or an aluminum alloy because the polarity is alternatively reversed and the oxide film can be removed by cleaning action of argon when the polarity of the welded base metal is reversed to negative. In addition to this, it is possible to perform deep melting penetration welding and high speed welding by the action of stiffness (directivity) of the high frequency pulse arc and by properly selecting the current conducting time period ratio of the positive polarity to the negative polarity or the peak current ratio of the positive polarity to the negative polarity.

In the drawings

FIG. 1 is a schematic block diagram showing the construction of a high frequency pulse welding apparatus in accordance with the present invention;

FIG. 2 is a schematic chart showing a waveform of high frequency current pulse used in the present invention;

FIG. 3 is a schematic chart showing a waveform of another high frequency current pulse used in the present invention;

FIG. 4 is a schematic view showing the overall construction of another high frequency pulse arc welding apparatus in accordance with the present invention;

FIG. 5 is a view showing a welding torch used in the present invention;

FIG. 6 is a diagram showing the construction of a waveform control power source of a high frequency pulse arc welding apparatus in accordance with the present invention;

FIG. 7 is a schematic diagram showing a nuclear power plant;

FIG. 8 is a schematic chart showing a modification of a waveform of high frequency current pulse used in the present invention;

FIG. 9 is a schematic chart showing another modification of a waveform of high frequency current pulse used in the present invention;

FIG. 10 is a perspective view showing a welded structure of honeycomb panels;

FIG. 11 is a perspective view showing a welded structure of a rail-car body;

FIG. 12 is a diagram showing the construction of an example of a pulse welder of a conventional method; and

FIG. 13 is a schematic chart showing a waveform of high frequency pulse current of the conventional method.

[Embodiment 1]

FIG. 1 is a schematic block diagram showing the construction of a high frequency pulse welding apparatus in accordance with the present invention. FIG. 2 is a schematic chart showing a waveform of high frequency current pulse in accordance with the present invention. Referring to FIG. 1, the pulse welding apparatus in accordance with the present invention comprises a power source 1 such as a high response power source of inverter type, analogue type, chopper type or the like; a DC high frequency pulse converting portion 2 for converting a direct current to a high frequency pulse current, the converting portion being composed of four IGBT switching elements; coaxial cables 4 connecting the welding power source 1 of direct current power source and the high frequency pulse converting portion 2; a control unit 3 for controlling the welding power source and the DC high frequency pulse converting portion; and a control cable 7 for applying a signal to bases of the IGBT elements.

Operation of the apparatus will be described below. When a main pulse control signal voltage of FIG. 2 is input to the bases of the IGBT elements T2 and T3 from the control unit 3 and the IGBI elements are turned ON, a welding current i sequentially flows from T2 through a base metal of objects 6 to be joined (arc load) of, a welding torch 5, T3 and returns to a negative polar terminal. When a reverse pulse control signal voltage of FIG. 2 is input to the bases of the IGBT elements T1 and T4 and the IGBI elements are turned ON, a welding current i sequentially flows from T1 through the welding torch 5, the base metal of objects 6 to be joined (arc load) of base metal, T4 and returns to the negative polar terminal. Therefore, the polarity at the welding portion is reversed. By periodically performing this operation, it is possible to obtain a continuous high frequency pulse current waveform having a steep fall as the ideal current waveform shown by the schematic chart of FIG. 2. The current conducting time periods t1, t2, t3 and a peak current in the waveform are set by changing setting values of the signals of the control unit. An example of application of the apparatus to a very narrow edge groove welding will be described below. A welding test was conducted under the following conditions. The objects to be joined 6 were plates of a carbon steel having a thickness of 30 mm. The other welding conditions were as follows. Gap width of I-shaped weld edge groove: 3 mm (the beveling angle of 3 degrees), shield gas: argon, tungsten electrode: flat electrode, welding filler (carbon steel) wire: 0.9 mm diameter, welding load voltage: 120 V, peak current: 500 A, and current conducting time period t1: 20 μsec (5 to 100 μsec). The reverse pulse current was 500 A at maximum and the current conducting time period t2 of the reverse pulse current was determined to set to 4 μsec (1 to 50 μsec) so that the welding current waveform became an optimum waveform on observation. Current conducting time period t3: 25 μsec (10 to

200 μsec), welding speed: 260 cm/min, length of the coaxial cable connecting between the DC high frequency pulse converting portion and the welding power source: 50 m, and length of the cable connecting between the DC high frequency pulse converting portion and the welding torch: 2 m. The result of welding the above conditions was that the arc was stiff (directive) and stably maintained in the narrow edge groove and a good weld result was obtained. The current changing rate in the rise time and the fall time of the pulse in this embodiment was 200 to 300 A per 1 μsec. The reverse pulse current was approximately one half of the main pulse current. A welding test was also conducted by the conventional method, but the test pieces could not be welded using a shield gas of solely argon because of occurrence of side wall arc. Further, a welding test was also conducted by the conventional method changing the shield gas to a mixing gas of argon and 50 % helium, but the arc became unstable when the length of the arc was fluctuated, and a joining fault occurred because of a narrow suitable range of the length of the arc. Furthermore, a series of tests by the method of the present invention were conducted by variously changing the gap width of the I-shaped weld edge groove, and the result showed that welding of a weld edge groove of 2.5 mm (the beveling angle of 3 degrees) and a plate thickness of up to 30 mm was possible.

FIG. 3 is a schematic chart showing a practical current waveform. The reference characters in the figure indicate the same corresponding current conducting time periods in FIG. 2, respectively. Each of the peak current and the reverse pulse current is composed of a plurality of waveforms while each of the currents in FIG. 2 is a rectangular waveform.

FIG. 4 shows the construction of a high frequency pulse TIG welding apparatus in accordance with the present invention. A TIG torch 5 and a TIG wire supply unit 13 are mounted on a movable cart 14 moving on a periphery of an object to be welded 6 of pipe. Argon gas for shielding the arc portion is supplied to the welding torch 5. A cooling water recirculation unit 12 is a cooling unit for preventing over heating of a welding power source 1 of AC 200 V, a semiconductor unit of a DC high frequency pulse converting portion 2 and the welding torch 5. Cooling water is recirculated through a coaxial cable 4 capable of making water flow. Control of the high frequency pulse current is performed by that a control signal of the welding power source 1 controls the semiconductors of the DC high frequency pulse converting portion 2 through a control signal cable 7.

FIG. 5 shows the construction of a high frequency pulse MIG welding apparatus. The construction of high frequency pulse MIG welding apparatus is the same as that of FIG. 4 except for a MIG torch 10 and a MIG wire supplying unit 15. Automatic welding can be performed by mounting the MIG torch 10.

FIG. 6 is a diagram showing the construction of a waveform control power source. The reference character 17 indicates a cable of which inductance is reduced by closely attaching a positive and a negative cables having a length of approximately 50 m to each other, the reference character 18 indicates an adder for performing feedback control of the average current by changing the current conducting time period t3. The current feedback is used for the TIG welding, and the voltage feedback is used for the MIG welding.

[Embodiment 2]

FIG. 7 is a schematic diagram showing the system of a BWR power plant having a butt welding structure in accordance with the present invention. Referring to the figure, the reference character 30 is a nuclear reactor, the reference character 31 is a turbine, the reference character 32 is a condenser, the reference character 33 is a condensate demineralizer, the reference character 34 is a low pressure condensate water pump, the reference character 35 is a feed water recirculation line, the reference character 36 is an electric conductivity detector, the reference character 37 is a dissolved oxygen concentration meter, the reference character 38 is an injector for oxygen or an inert gas or an alkali agent, the reference character 39 is a pH meter, the reference character 40 is a feed water heater and the reference character 41 is a reactor water clean-up system. Pipes made of austenitic steel of SUS 304L or SUS 316L are used for the primary cooling system piping of the nuclear reactor 30, but pipes made of a carbon steel or a low alloy steel are used for the other piping. In this embodiment, pipes made of the carbon steel or the low alloy steel were joined with the same weld edge groove and in the same welding method as those of Embodiment 1. The result showed that stress release annealing after welding could be eliminated. That is, the remaining stress was so small that the pipes could be used after welded as they were.

Further, the primary cooling system pipes were welded in the same method as Embodiment 3 to be described below.

[Embodiment 3]

When the structure of a joined portion is grown to large grains, there are some cases where the boundary between the base metal and the joined portion cannot be clearly detected by ultrasonic wave inspection. Prevention of grain growth will be described below, as an example of application of the present invention. A welding test was conducted under the following conditions. Welding method: TIG welding with wire supply, base metal: austenitic steels of SUS 304L and SUS 316L, plate thickness: 30 mm, V-shaped weld edge groove: bevel angle of 30 degrees, and welding load voltage: 120 V. While the welding peak current and the time period were kept at 600 A and 79 μ sec constant, respectively, the current conducting time periods were alternatively switched between t1: 50 μsec, t2: 4 μsec, t3: 25 μsec and t1: 20 μsec, t2: 4 μsec, t3: 55 μsec. The weld result was that the average current (average arc pressure) was varied in synchronism with the switching period and the molten weld metal was stirred corresponding to the variation to prevent grain growth of the weld metal. The current changing rate in the rise time and the fall time of the pulse in this embodiment was similar to that in Embodiment 1. The reverse current was one half of the peak current. Vibration of the high frequency pulse current also accelerated the prevention of grain growth. An inspection result of the test piece welded under the conditions showed that the joined portion and the base metal could be discriminated more clearly than those welded by the conventional TIG welding method. The above test was conducted by varying the current conducting time period (t1) of the main peak current in order to change the average current (average arc pressure) while the switching time period was kept constant. However, the same effect can be obtained by periodically varying the base current in the current conducting time period t3 or the peak current of the main current.

[Embodiment 4]

An example of welding of deep melting penetration with aluminum will be described below. Since the polarity is reversed in the high frequency pulse current waveform in the present invention, aluminum can be welded because the base metal is cleaned and the oxide film is removed by positive argon ions when the base metal to be joined is in negative polarity. The cleaning effect is higher as the time period when the base metal is in negative polarity is longer. However, the depth of penetration is shallow and a consuming rate of a tungsten electrode is large. Therefore, the depth of penetration can be increased by shortening the time period of the base metal in negative polarity and lengthening the time period of in positive polarity within a range capable of being welded. A welding test was conducted under the following conditions. Base metal to be joined: aluminum plate, plate thickness: 6 mm, joining: I-butt joining, electrode: tungsten electrode of 4 mm diameter, welding load voltage: 120 V, welding peak current: 500 A. The current conducting time periods were t1: 30 μsec, t2: 3 μsec, t3: 20 μsec, and the welding speed was 200 cm/min. The welding result showed that welding could be performed by once-through passing with good wave beads in the reverse side. The current changing rate in the rise time and the fall time of the pulse in this embodiment was similar to that described previously. A conventional alternating current welding having the cleaning action can be perform welding by decreasing the welding speed to 150 cm/min. However, there is a disadvantage in that the beads become wider in width and in heat affected portion. Further, a welding test was conducted by setting the power source condition to a constant voltage condition and changing the tungsten electrode to a tungsten wire. The result showed that high speed welding could be performed at the same speed as described above.

[Embodiment 5]

FIG. 10 is a perspective view showing a welded structure of honeycomb panels used for a car body of a rail car which is butt-welded through the same method as in Embodiment 4. The honeycomb panel is constructed by joining a surface plate 51 made of an aluminum alloy, a core member 52 made of an aluminum alloy and a frame member 56 of an aluminum alloy with a solder. The honeycomb panels were joined through the frame members 56 by forming welded portions 55 of a narrow edge groove in the obverse and reverse sides using a welding torch 54 under the same welding condition as described above. In this embodiment, the honeycomb panels were joined by MIG welding. The filler used had the same composition as that of the base metal, the weld edge groove was I-shaped, and the gap of the weld edge groove was 3 mm.

FIG. 11 is a perspective view showing a car body of the rail-car assembled though the welding method in accordance with the present invention. The main car body is composed of ceiling boards 60, car-body side walls 61 and floor boards of the car body, and these members are welded and assembled at welded portions 63 through the welding method of the present embodiment. The total length of the car body is 25 m.

According to the present invention, by the stiff (directive) arc which is obtained by the high frequency electromagnetic pinch force eliminated the effect of inductance of the welding cable, narrow edge groove welding can be stably performed without using a hydrogen containing mixed gas causing hydrogen embrittlement as the shield. Further, by the cleaning action of the polarity reversing current, deep penetration welding of aluminum and high speed welding can be performed.

Since the effect of inductance of the welding cable does not exist even at a place 50 m apart from the welding power source, the present invention can be applied to maintenance welding by remote operation of a pipe in a nuclear plant.

Since grain growth can be prevented by varying the average current (arc pressure) with several Hz, the base metal and the joined portion cannot be clearly detected by ultrasonic wave inspection and accordingly the ultrasonic wave inspection can be easily performed.

The effect of the high frequency pulse can be obtained even if the present invention is applied to a carbon oxide gas arc weld or a shielded metal arc weld.

**Claims**

**1.** A method for high frequency pulse arc welding which is performed by generating an arc between any one of an inconsumable electrode (5) and a consumable electrode (5) arranged near a portion of a base metal (6) to be welded and the base metal (6) with main pulse current, **characterised in that**:

said main pulse current has a current conducting time of 5-100 µsec per one pulse; and when said main pulse current is shifted from ON to OFF, a reverse pulse current having a polarity opposite to a polarity of said main pulse current is supplied between the electrode (5) and the base metal (6) to make the rate of passage from the peak value of the main pulse current to the peak value of the reverse pulse current not smaller than 50A per 1 µsec, the reverse pulse immediately following the main pulse.

**2.** A method for high frequency pulse arc welding according to claim 1, wherein a current stopping period is provided between said reverse pulse current and said main pulse current.

**3.** A method for high frequency pulse arc welding according to claim 1, wherein a base current smaller than said main pulse current is applied during a period between said reverse pulse current and said main pulse current after said reverse pulse current.

**4.** A method for high frequency pulse arc welding according to claim 3, wherein any one of peak values of said main pulse current and said base current and current conducting time periods of said main pulse current and said base current are periodically varied.

**5.** A method for high frequency pulse arc welding according to any one of claim 1 to claim 4, wherein said main pulse current is varied with a period in a range of several Hz to several tens Hz to stir the molten metal to prevent grain growth.

**6.** A method for high frequency pulse arc welding according to claim 1 which is performed by generating an arc between an inconsumable electrode (5) arranged near a portion of a base metal (6) to be welded and the base metal (6) with main pulse current while a filler wire (13, 15) is being supplied.

**7.** A method for high frequency pulse arc welding, wherein I-shaped groove butt welding having a gap not larger than a width of 6mm is carried out using the welding method for high frequency pulse arc welding, according to any one of claim 1 to claim 6.

**8.** A method for high frequency pulse arc welding according to any one of claim 1 to claim 7, wherein the rise and the fall time of said main pulse current are not longer than 50 µsec.

**9.** An apparatus for high frequency pulse arc welding by which welding is performed by generating an arc between any one of an inconsumable electrode (5) and a consumable electrode (5) arranged near a portion of a base metal (6) to be welded and the base metal (6) with main pulse current, the apparatus comprising: a welding power source (1) for supplying said main pulse current; a high frequency converter (2) for converting a direct current to a high frequency pulse welding current having a polarity opposite to a polarity of the direct current; **characterised in that** said apparatus further comprises:

a control unit (3) for applying a reverse pulse current having a polarity opposite to a polarity of said main pulse current, immediately following the main pulse, between the electrode (5) and the base metal (6) to make the rate of passage from the peak value of the main pulse current to the peak value of the reverse pulse current not smaller than 50A per 1 µsec when said main pulse current is shifted from ON to OFF, said main pulse having a current conducting time of 5 -100 µsec per one pulse.

**10.** An apparatus for high frequency pulse arc welding according to claim 9, wherein said welding power source and said high frequency converter are separated and connected using any one of a welding cable and a coaxial cable (4).

**11.** An apparatus for high frequency pulse arc welding according to claim 9 or claim 10, wherein said control unit has a means for establishing a current stop period between said main pulse current and said reverse pulse current or for establishing a base current which is smaller than said main pulse current.

**12.** An apparatus for high frequency pulse arc welding according to claim 11, wherein said main pulse current, said reverse pulse current, said base current and said current conducting time period, said current stopping period can be independently varied.

**13.** A method for butt welding of a aluminium or an aluminium alloy, wherein said butt welding is carried out using the welding method according to any one of claims 1 to 8.

**14.** A method of welding of a rail-car body structure (60, 61, 62, 64) made of an aluminium alloy, wherein said welding is carried out using the welding method according to any one of claims 1 to 8.

**15.** A method for butt welding of a carbon steel or a low-alloy steel, wherein said butt welding is carried out using the welding method according to any one of claims 1 to 8.

**16.** A method for butt welding of a carbon steel or a low-alloy steel according to claim 15, wherein a stress relief annealing treatment after said butt welding is omitted.

**17.** A method for manufacturing a nuclear power plant comprising a nuclear reactor (30), a steam turbine (31), a condenser (32), a condensate demineraliser (33) and pipes (35) connecting between the components, said pipes being made of any one of a carbon steel and a low-alloy steel, wherein said pipes have a butt weld structure, and are joined using the welding method according to claim 15 or claim 16.

**Patentansprüche**

**1.** Hochfrequenzimpuls-Lichtbogenschweißverfahren, wobei zwischen einer nahe einem zu verschweißenden Teil eines Grundmetalls (6) angeordneten abschmelzenden oder nicht-abschmelzenden Elektrode (5) und dem Grundmetall (6) mit einem Hauptimpulsstrom ein Lichtbogen erzeugt wird, **dadurch gekennzeichnet,**

**daß** der Hauptimpulsstrom eine Stromflußzeit von 5 bis 100 µs pro Impuls aufweist und

**daß** dann, wenn der Hauptimpulsstrom von EIN nach AUS geschoben wird, zwischen die Elektrode (5) und das Grundmetall (6) ein Gegenimpulsstrom mit einer zur Polarität des Hauptimpulsstroms entgegengesetzten Polarität angelegt wird, um die Änderungsgeschwindigkeit vom Spitzenwert des Hauptimpulsstroms zum Spitzenwert des Gegenimpulsstroms nicht kleiner als 50 A/µs zu machen, so daß der Gegenimpuls unmittelbar auf den Hauptimpuls folgt.

**2.** Höchfrequenzimpuls-Lichtbogenschweißverfahren nach Anspruch 1, zwischen dem Gegenimpulsstrom und dem nachfolgenden Hauptimpulsstrom eine Stromunterbrechungsperiode vorgesehen wird.

**3.** Hochfrequenzimpuls-Lichtbogenschweißverfahren nach Anspruch 1, wobei während einer Periode zwischen dem Gegenimpulsstrom und dem nachfolgenden Hauptimpulsstrom ein Grundstrom angelegt wird, der kleiner ist als der Hauptimpulsstrom.

**4.** Hochfrequenzimpuls-Lichtbogenschweißverfahren nach Anspruch 3, wobei die Spitzenwerte des Haupt- und des Gegenimpulsstroms oder deren Stromflußzeiten periodisch geändert werden.

**5.** Hochfrequenzimpuls-Lichtbogenschweißverfahren nach einem der Ansprüche 1 bis 4, wobei der Hauptimpulsstrom mit einer Periode im Bereich von mehreren Hz bis zu mehreren 10 Hz geändert wird, um die Metallschmelze zu bewegen und dadurch Kornwachstum zu verhindern.

**6.** Hochfrequenzimpuls-Lichtbogenschweißverfahren nach Anspruch 1, wobei zwischen einer nahe einem zu schweißenden Teil eines Grundmetalls (6) angeordneten nicht-abschmelzenden Elektrode (5) und dem Grundmetall (6) mit einem Hauptimpulsstrom ein Lichtbogen erzeugt und dabei ein Zusatzdraht (13, 15) zugeführt wird.

**7.** Hochfrequenzimpuls-Lichtbogenschweißverfahren, wobei unter Anwendung des Hochfrequenzimpuls-Lichtbogenschweißverfahrens nach einem der Ansprüche 1 bis 6 eine Stumpfschweißung an einer I-förmigen Nut durchgeführt wird, die einen Spalt mit einer Breite von nicht mehr als 6 mm aufweist.

**8.** Hochfrequenzimpuls-Lichtbogenschweißverfahren nach einem der Ansprüche 1 bis 7, wobei die Anstiegs- und Abfallszeit des Hauptimpulsstroms nicht länger ist als 50 µs.

**9.** Hochfrequenzimpuls-Lichtbogenschweißvorrichtung, mit der eine Schweißung dadurch erfolgt, daß zwischen einer nahe einem zu verschweißenden Teil eines Grundmetalls (6) angeordneten abschmelzenden oder nicht-abschmelzenden Elektrode (5) und dem Grundmetall (6) mit einem Hauptimpulsstrom ein Lichtbogen erzeugt wird, wobei die Vorrichtung eine Schweißenergiequelle (1) zur Zuführung des Hauptimpulsstroms und einen Hochfrequenz-Wechselrichter (2) zum Wandeln eines Gleichstroms in einen Hochfrequenzimpuls-Schweißstrom mit einer zur Polarität des Gleichstroms entgegengesetzten Polarität aufweist,

**dadurch gekennzeichnet, daß** die Vorrichtung ferner eine Steuereinheit (3) zum Anlegen eines Gegenimpulsstroms mit einer zur Polarität des Hauptimpulsstroms entgegengesetzten Polarität zwischen der Elektrode (5) und dem Grundmetall (6) unmittelbar im Anschluß an den Hauptimpuls aufweist, um die Änderungsgeschwindigkeit vom Spitzenwert des Hauptimpulsstroms zum Spitzenwert des Gegenimpulsstroms nicht kleiner als 50 A/µs zu machen, wenn der Hauptimpulsstrom von EIN nach AUS geschoben wird, wobei der Hauptimpuls eine Stromflußzeit von 5 bis 100 µs pro Impuls aufweist.

**10.** Hochfrequenzimpuls-Lichtbogenschweißvorrichtung nach Anspruch 9, wobei die Schweißenergiequelle und der Hochfrequenz-Wechselrichter getrennt und über ein Schweißkabel oder ein Koaxialkabel (4) miteinander verbunden sind.

**11.** Hochfrequenzimpuls-Lichtbogenschweißvorrichtung nach Anspruch 9 oder 10, wobei die Steuereinheit eine Einrichtung zur Erzeugung einer Stromunterbrechungsperiode zwischen dem Hauptimpulsstrom und dem Gegenimpulsstrom oder zur Erzeugung eines Grundstroms, der kleiner ist als der Hauptimpulsstrom, aufweist.

**12.** Hochfrequenzimpuls-Lichtbogenschweißvorrichtung nach Anspruch 11, wobei der Hauptimpulsstrom, der Gegenimpulsstrom, der Grundstrom, die Stromflußdauer und die Stromunterbrechungsperiode unabhängig veränderbar sind.

**13.** Verfahren zum Stumpfschweißen von Aluminium oder einer Aluminiumlegierung, wobei die Stumpfschweißung unter Anwendung des Schweißverfahrens nach einem der Ansprüche 1 bis 8 erfolgt.

**14.** Verfahren zum Schweißen eines aus einer Aluminiumlegierung bestehenden Eisenbahnwagenaufbaus (60, 61, 62, 64), wobei die Schweißung unter Anwendung des Schweißverfahrens nach einem der Ansprüche 1 bis 8 erfolgt.

**15.** Verfahren zum Stumpfschweißen von Kohlenstoffstahl oder niedrig legiertem Stahl, wobei die Stumpfschweißung unter Anwendung des Schweißverfahrens nach einem der Ansprüche 1 bis 8 erfolgt.

**16.** Verfahren zum Stumpfschweißen von Kohlenstoffstahl oder niedrig legiertem Stahl nach Anspruch 15, wobei eine Entspannungs-Temperierbehandlung nach dem Stumpfschweißen weggelassen wird.

**17.** Verfahren zur Herstellung eines Kernkraftwerks, das einen Kernreaktor (30), eine Dampfturbine (31), einen Kondensator (32), eine Kondensat-Demineralisiereinrichtung (33) und diese Bauteile miteinander verbindende Rohre (35) aufweist, wobei die Rohre aus Kohlenstoffstahl oder niedrig legiertem Stahl bestehen, und wobei die Rohre einen stumpf geschweißten Aufbau aufweisen und unter Anwendung des Schweißverfahrens nach Anspruch 15 oder 16 zusammengefügt werden.

## Revendications

**1.** Procédé de soudure à l'arc par impulsions à haute fréquence qui est effectué en créant un arc entre l'une quelconque parmi une électrode non-consommable (5) et une électrode consommable (5) disposées à proximité d'une partie d'un métal de base (6) à souder et le métal de base (6) à l'aide d'un courant pulsé principal, **caractérisé en ce que** :

ledit courant pulsé principal a un temps de conduction de courant de 5 à 100 µs par impulsion, et

lorsque ledit courant pulsé principal est décalé depuis EN SERVICE jusqu'à COUPE, un courant pulsé inverse ayant une polarité opposée à la polarité dudit courant pulsé principal est envoyé entre l'électrode (5) et le métal de base (6) pour amener la vitesse de passage depuis la valeur de crête du courant pulsé principal jusqu'à la valeur de crête du courant pulsé inverse à ne pas être inférieure à 50 A par µs, l'impulsion inverse suivant immédiatement l'impulsion principale.

**2.** Procédé de soudure à l'arc par impulsions à haute fréquence selon la revendication 1, dans lequel une période d'arrêt de courant est fournie entre ledit courant pulsé inverse et ledit courant pulsé principal.

**3.** Procédé de soudure à l'arc par impulsions à haute fréquence selon la revendication 1, dans lequel un courant de base plus petit que ledit courant pulsé principal est appliqué pendant une période située entre ledit courant pulsé inverse et ledit courant pulsé principal, après ledit courant pulsé inverse.

**4.** Procédé de soudure à l'arc par impulsions à haute fréquence selon la revendication 3, dans lequel l'une quelconque des valeurs de crête dudit courant pulsé principal et dudit courant pulsé de base et des périodes de conduction de courant dudit courant pulsé principal et dudit courant pulsé de base sont modifiées périodiquement.

**5.** Procédé de soudure à l'arc par impulsions à haute fréquence selon l'une quelconque des revendications 1 à 4, dans lequel ledit courant pulsé principal est modifié avec une période située dans une plage de plusieurs Hz jusqu'à plusieurs dizaines de Hz pour agiter le métal fondu pour empêcher une croissance de grain.

**6.** Procédé de soudure à l'arc par impulsions à haute fréquence selon la revendication 1, qui est effectué en créant un arc entre une électrode non-consommable (5) disposée à proximité d'une partie d'un métal de base (6) à souder et le métal de base, à l'aide d'un courant pulsé principal alors qu'un fil de charge (13, 15) est alimenté.

**7.** Procédé de soudure à l'arc par impulsions à haute fréquence, dans lequel une soudure bout-à-bout d'une gorge en forme de I, ayant un espace qui n'est pas plus grand qu'une largeur de 6 mm est effectué en utilisant le procédé de soudure pour une soudure à l'arc par impulsions à haute fréquence, selon l'une quelconque des revendications 1 à 6.

**8.** Procédé de soudure à l'arc par impulsions à haute fréquence selon l'une quelconque des revendications 1 à 7, dans lequel le temps de montée et le temps de chute dudit courant pulsé principal ne sont pas plus longs que 50 µs.

**9.** Dispositif de soudure à l'arc par impulsions à haute fréquence par lequel une soudure est effectuée en créant un arc entre l'une quelconque parmi une électrode non-consommable (5) et une électrode consommable (5) disposées à proximité d'une partie de métal de base (6) à souder et le métal de base (6), à l'aide d'un courant pulsé principal, le dispositif comportant : une source de courant de soudure (1) pour fournir ledit courant pulsé principal, un convertisseur haute fréquence (2) pour convertir un courant continu en courant de soudure par impulsions à haute fréquence ayant une polarité opposée à la polarité du courant continu, **caractérisé en ce que** ledit dispositif comporte de plus :

une unité de commande (3) pour appliquer un courant pulsé inverse ayant une polarité opposée à la polarité dudit courant pulsé principal, suivant immédiatement l'impulsion principale, entre l'électrode (5) et le métal de base (6) pour rendre la vitesse de passage depuis la valeur de crête du courant pulsé principal jusqu'à la valeur de crête du courant pulsé inverse non-inférieure à 50 A par µs lorsque ledit courant pulsé principal est décalé depuis EN SERVICE jusqu'à COUPE, ladite impulsion principale ayant un temps de conduction de courant de 5 à 100 µs par impulsion.

**10.** Dispositif de soudure à l'arc par impulsions à haute fréquence selon la revendication 9, dans lequel ladite source de courant de soudure et ledit convertisseur haute fréquence sont séparés et reliés en utilisant l'un quelconque parmi un câble de soudure et un câble coaxial (4).

**11.** Dispositif de soudure à l'arc par impulsions à haute fréquence selon la revendication 9 ou la revendication 10, dans lequel ladite unité de commande a des moyens pour établir une période d'arrêt de courant entre ledit courant pulsé principal et ledit courant pulsé inverse ou pour établir un courant de base qui est plus petit que ledit courant pulsé principal.

**12.** Dispositif de soudure à l'arc par impulsions à haute fréquence selon la revendication 11, dans lequel ledit courant pulsé principal, ledit courant pulsé inverse, ledit courant de base et ladite période de conduction de courant, ladite période d'arrêt de courant, peuvent être modifiés de manière indépendante.

**13.** Procédé de soudure bout-à-bout d'aluminium ou d'un alliage d'aluminium, dans lequel ladite soudure bout-à-bout est effectuée en utilisant le procédé de soudure selon l'une quelconque des revendications 1 à 8.

**14.** Procédé de soudure d'une structure de carrosserie de wagon (60, 61, 62, 64) constituée d'un alliage d'aluminium, dans lequel la soudure est effectuée en utilisant le procédé de soudure selon l'une quelconque des revendications 1 à 8.

**15.** Procédé de soudure bout-à-bout d'un acier au carbone ou d'un acier faiblement allié, dans lequel ladite soudure bout-à-bout est effectuée en utilisant le procédé de soudure selon l'une quelconque des revendications 1 à 8.

**16.** Procédé de soudure bout-à-bout d'un acier au carbone ou d'un acier faiblement allié selon la revendication 15, dans lequel un traitement de recuit de libération de contraintes après ladite soudure bout-à-bout est supprimé.

**17.** Procédé de fabrication d'une centrale électrique nucléaire comportant un réacteur nucléaire (30), une turbine à vapeur (31), un condenseur (32), un dispositif de déminéralisation de condensat (33) et des tuyauteries (35) reliant les composants, lesdites tuyauteries étant constituées de l'un quelconque parmi un acier au carbone et un acier faiblement allié, dans lequel lesdites tuyauteries ont une structure soudée bout-à-bout, et sont reliées en utilisant le procédé de soudure selon la revendication 15 ou 16.

# FIG. 1

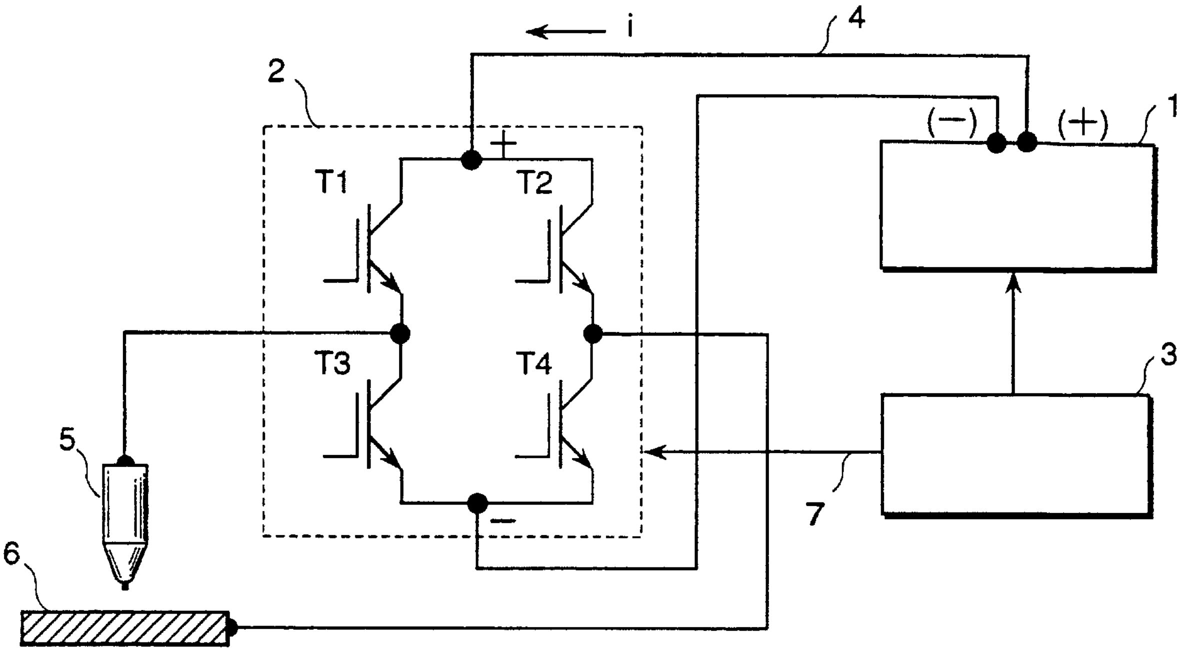
i
4
2
1
(−)
(+)
T1
T2
T3
T4
+
−
3
5
6
7

# FIG. 2

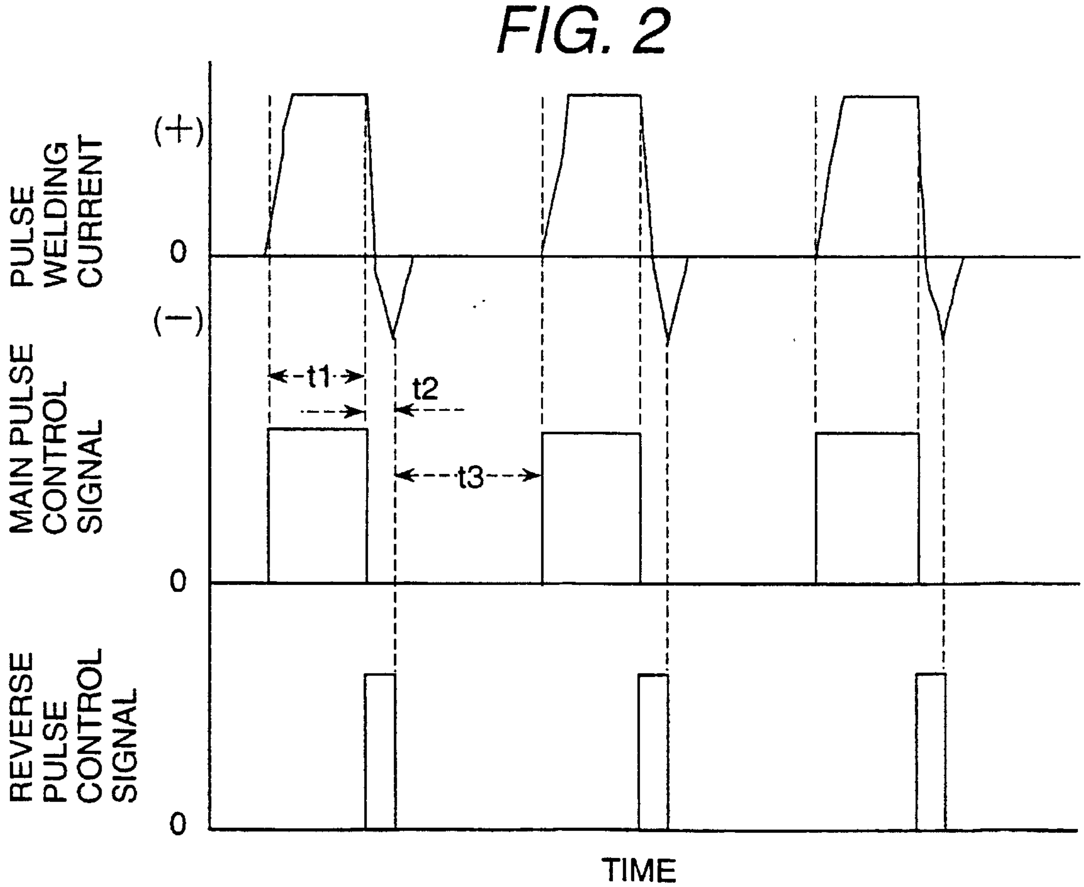
PULSE WELDING CURRENT
(+)
0
(−)
MAIN PULSE CONTROL SIGNAL
t1
t2
t3
0
REVERSE PULSE CONTROL SIGNAL
0
TIME

FIG. 3

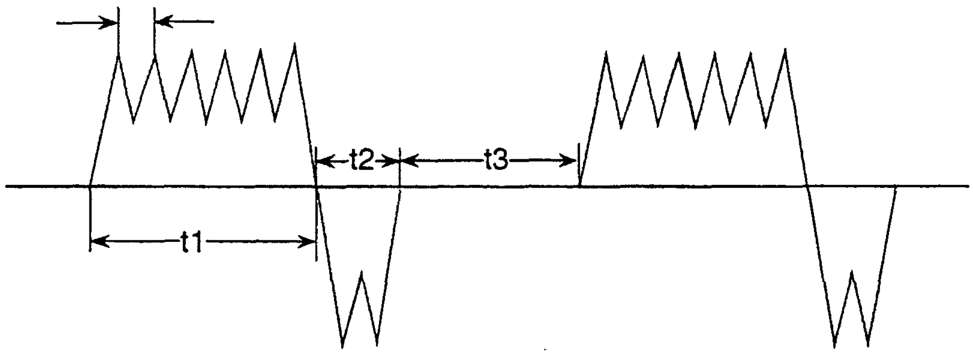


FIG. 4

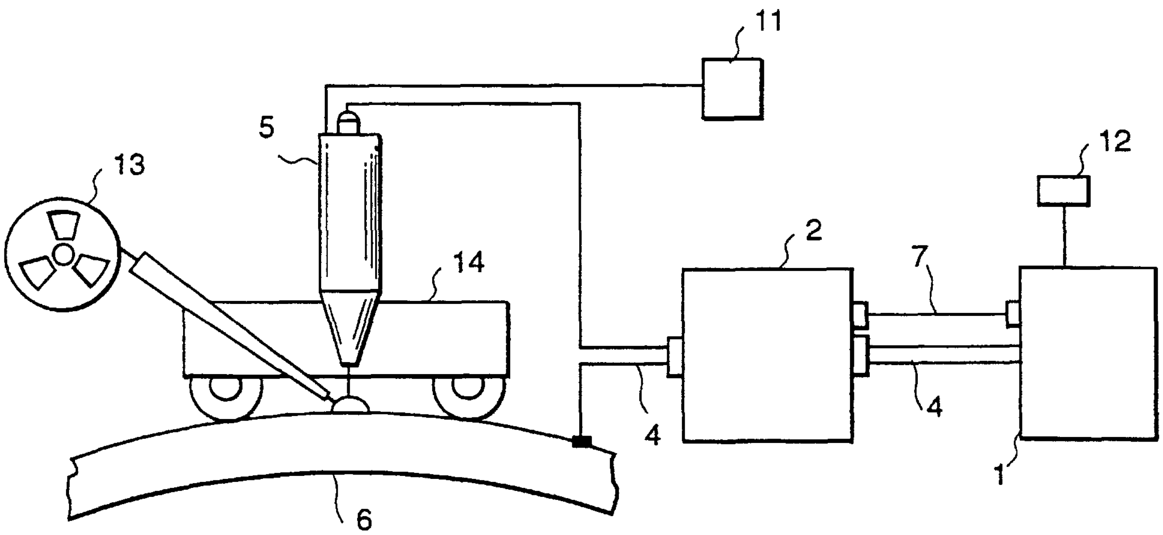

FIG. 5

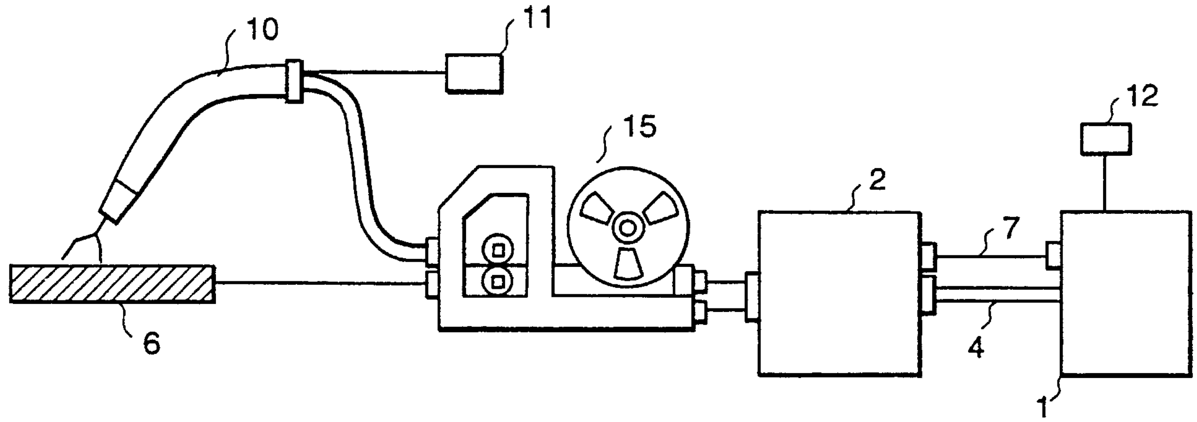


FIG. 7

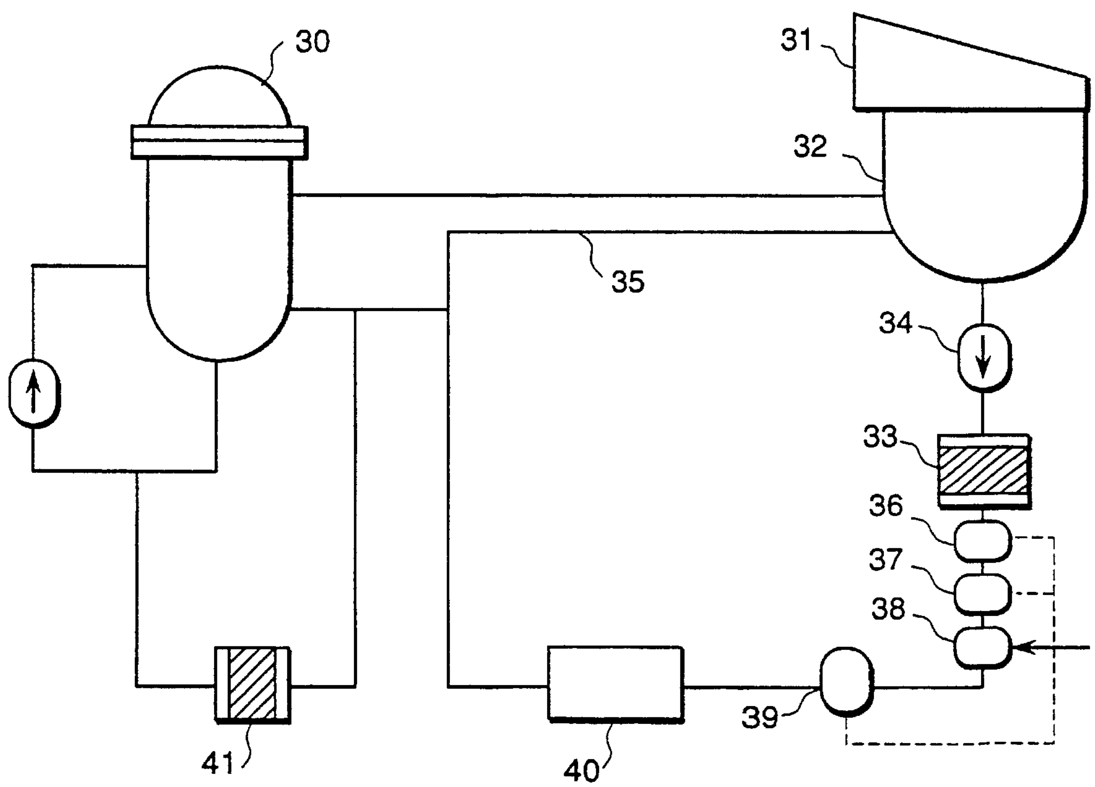

FIG. 6

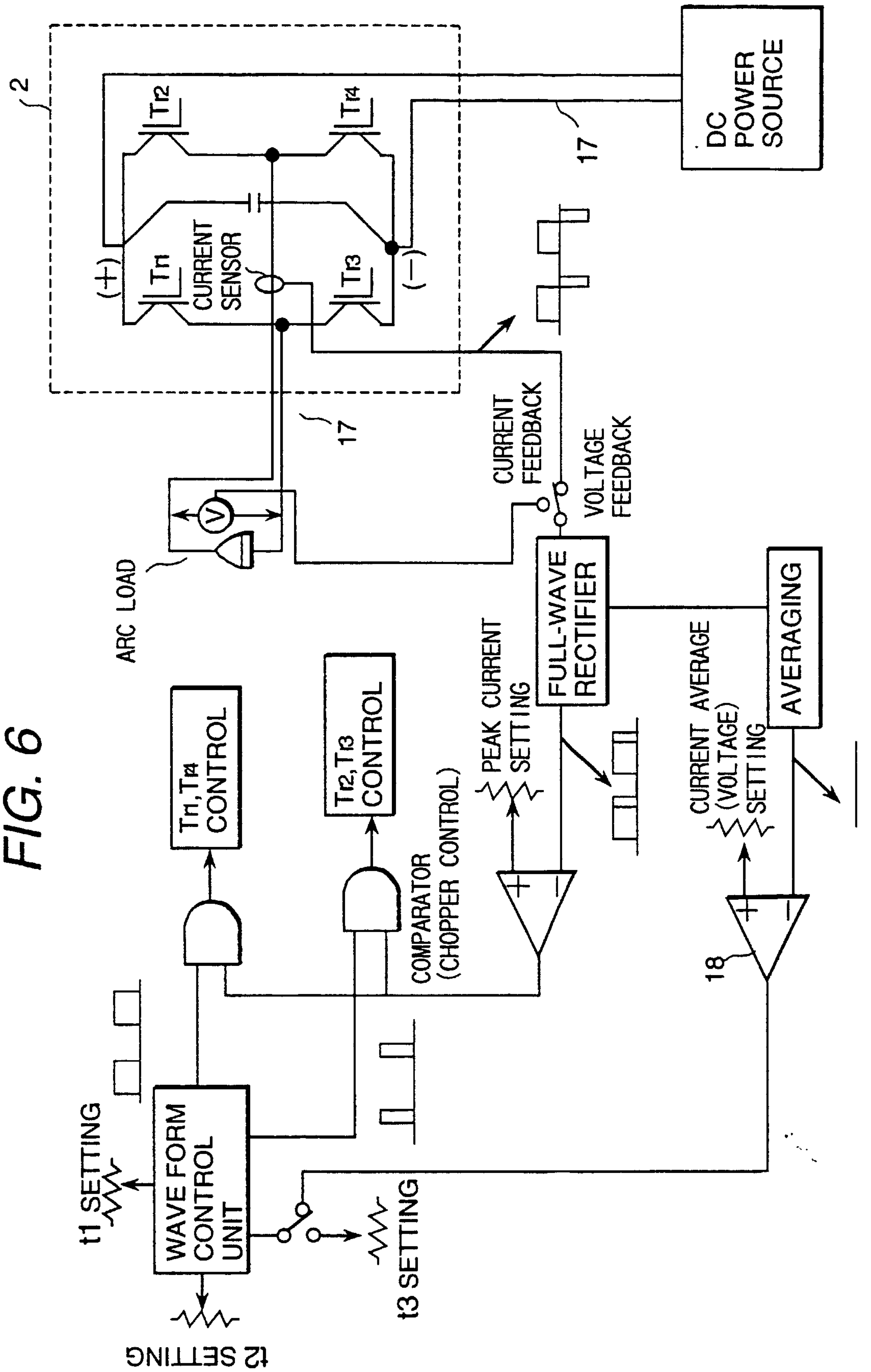
2
DC POWER SOURCE
17
Tr2
Tr4
Tr1
Tr3
(+)
(−)
CURRENT SENSOR
17
CURRENT FEEDBACK
VOLTAGE FEEDBACK
ARC LOAD
V
FULL-WAVE RECTIFIER
AVERAGING
Tr1,Tr4 CONTROL
Tr2,Tr3 CONTROL
PEAK CURRENT SETTING
CURRENT AVERAGE (VOLTAGE) SETTING
COMPARATOR (CHOPPER CONTROL)
18
t1 SETTING
WAVE FORM CONTROL UNIT
t2 SETTING
t3 SETTING

FIG. 8

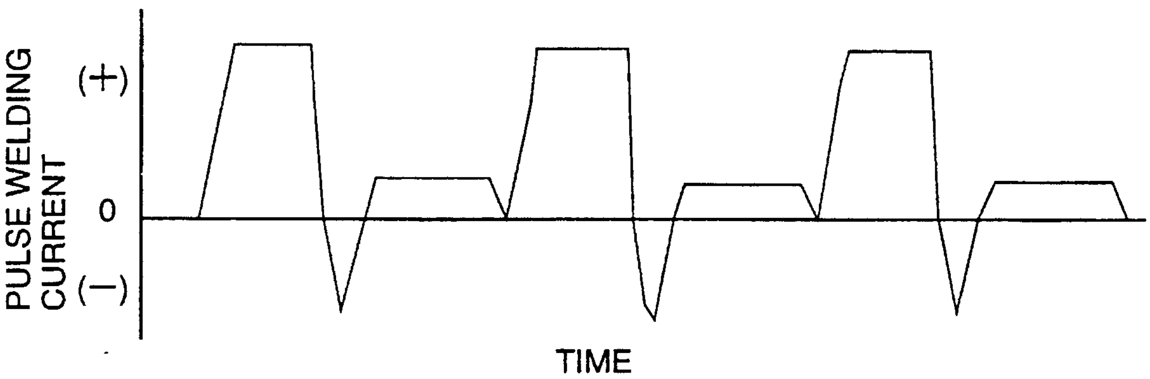


FIG. 9

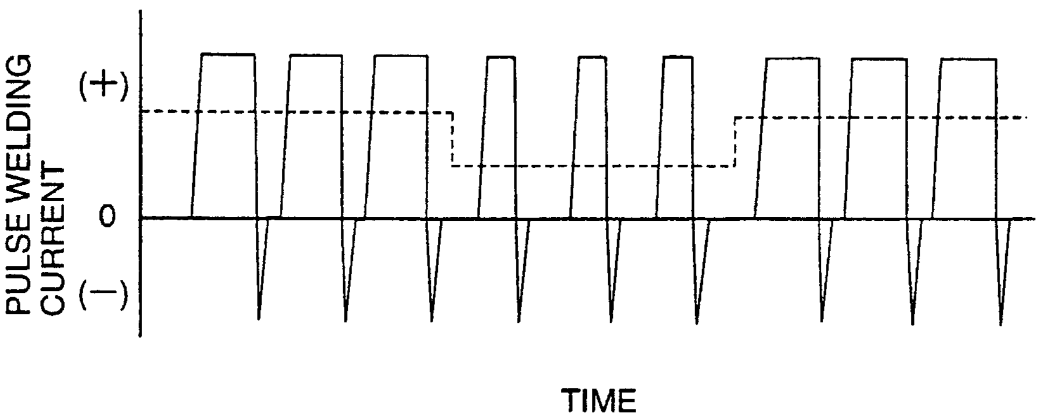

FIG. 10

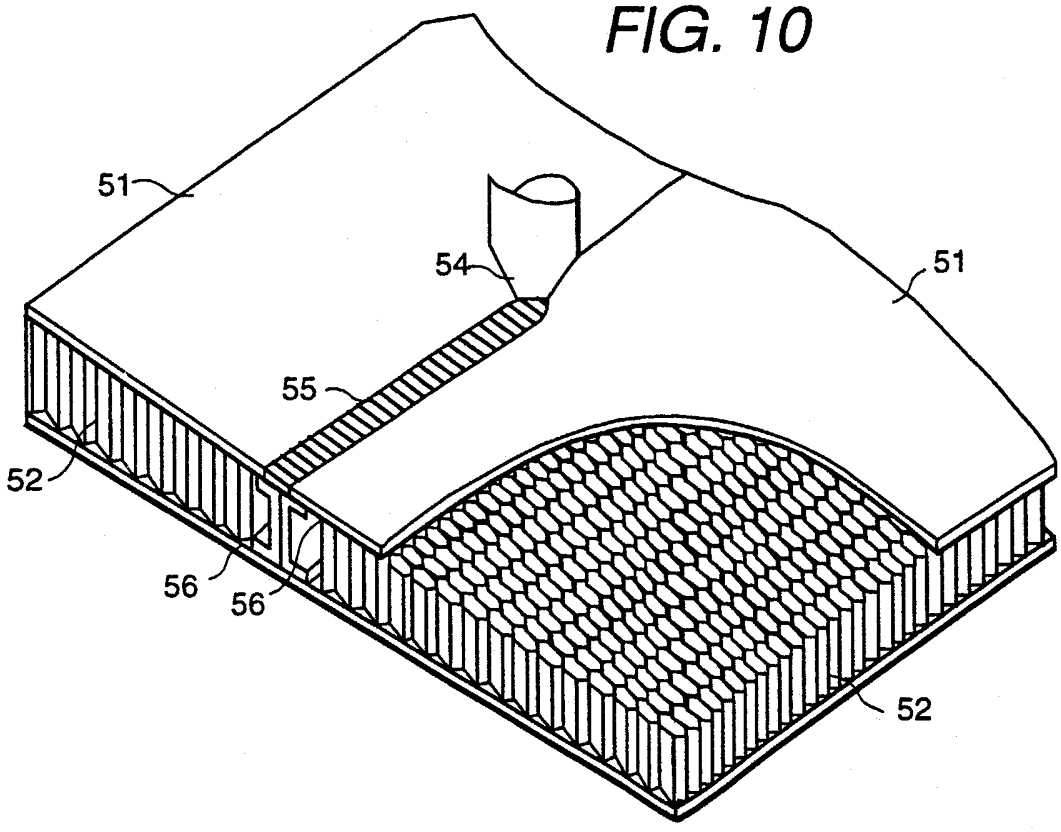


FIG. 11

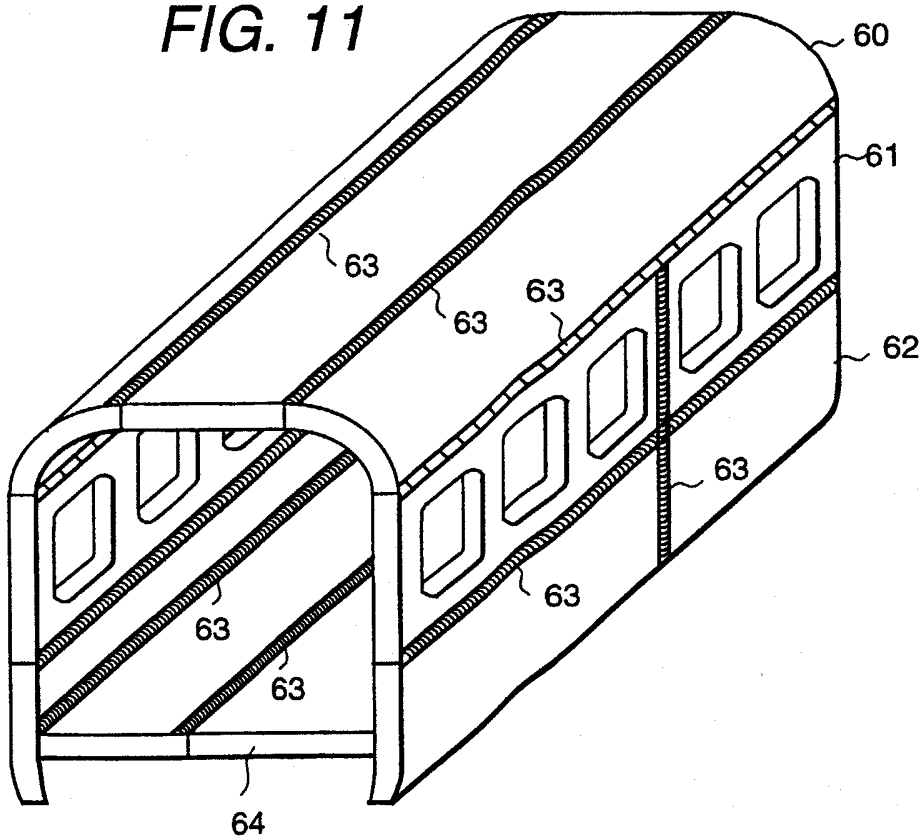

*FIG. 12 (PRIOR ART)*

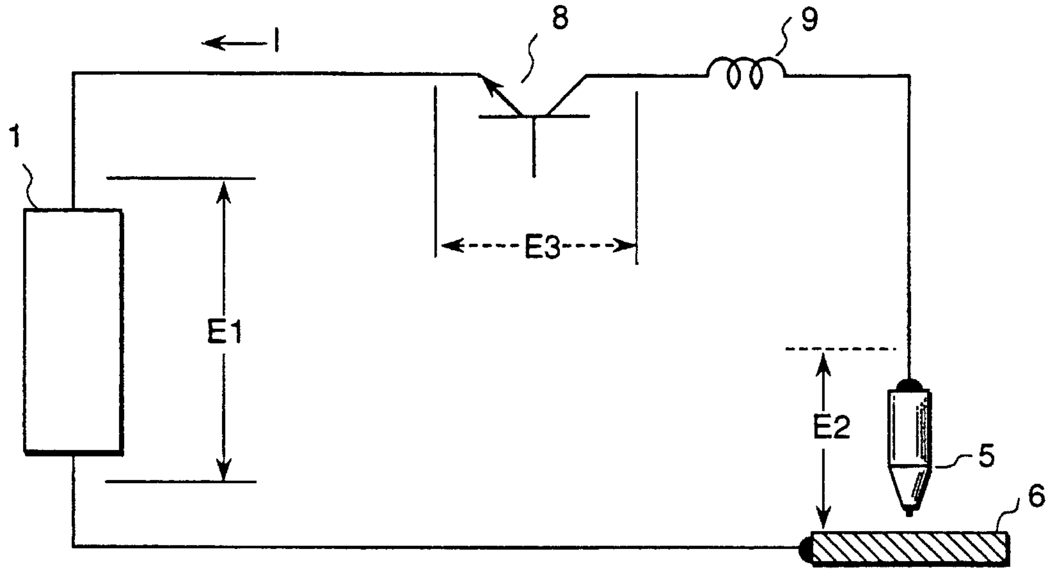


*FIG. 13 (PRIOR ART)*